# EUROPEAN PATENT APPLICATION

(11) **EP 0 580 293 A1**
(43) Date of publication of application: **26.01.1994**
(21) Application number: 93304862.1
(22) Date of filing: 22.06.1993
(51) Int. Cl.: H04N 1/04, G03D 13/00

(54) **Scanning film during the film process**

(30) Priority: 17.07.1992 US 916246; 17.07.1992 US 916244
(71) Applicant: International Business Machines Corporation, Armonk, N.Y. 10504 (US)
(72) Inventor: Edgar, Albert Durr, Austin, Texas 78727-6069 (US)
(74) Representative: Burt, Roger James, Dr.

(57) **Abstract**

A method and apparatus for developing a film to produce a digital image by scanning an image on the film as it develops and creating a digital representation of the image on the film. In an apparatus and method adapted for use with colour films, the film is scanned with reflected light from both sides of the film and also by transmitted light.

## Description

This invention generally relates to improvements in image processing and more particularly to enhancing film processing by applying electronic imaging technology.

Image enhancement has been the subject of a large body of patent art. For example, US Patent 4,606,625 discloses a system for colourizing black and white film in which interpolative techniques are used to reduce the number of frames which have to be individually colourized.

Another example of a prior art image enhancement is US Patent 4,907,075 which discloses a method for selecting a limited number of presentation colours from a larger palette for a selected image. A three dimensional colour histogram of an image is generated and a first colour is selected based upon the colour occurring most frequently in the image. Subsequent presentation colours are selected by choosing one at a time those colours having the highest weighted frequency of occurrence wherein the weighting is such that colours closest to the previously selected colour are weighted very little while colours furthest away from the selected colour are weighted the most.

Still another example of an image enhancement system is found in US Patent 4,984,072 which discloses a system and method for colour enhancing an image or a series of images such as a motion picture by digitally capturing the images, interactively defining masks corresponding to objects in the images having similar hues, creating regions from these masks, and for each region, defining a colour transfer function for converting image gray-scale information to unique values of hue, luminance, and saturation. The gray-scale values within each region are then processed through that region's colour transfer function, and the resulting colours applied to the image and stored for later retrieval and display.

Still another example of an imaging system is US Patent 5,041,992 which discloses a system and method for interactive design of user manipulable graphic elements. The system allows a user to create and manipulate graphic elements that can be subsequently employed to create a program.

US Patent 5,041,995 discloses a method for controlling the exposure used to print a developed film negative. The patent pertains to inspection of the negative film medium after the film has been processed.

US Patent 4,554,460 discloses a photodetector automatic adaptive sensitivity system for controlling the exposure of a scanned image during the electronic scanning of the object.

None of these prior art patents or any other prior art that applicant is aware of disclose a method or system for enhancing film development through the application of electronic imaging technology.

It is therefore an aim of the present invention of enhance film development through the application of electronic imaging technology.

Accordingly, the present invention provides film processing apparatus comprising: means for scanning an image on a film as it develops; and means for creating a digital representation of the image on the film.

In a preferred apparatus, designed for use with colour film, the scanner means is operable to scan the film with both reflected and transmitted light. Scanning from both sides of the film with reflected light and by transmitted light yields three values for each pixel in the digital image. These values can be solved to yield a pixel value for each of the three colours of the colour film.

Preferably the scanner means operates to carry out multiple scans of the image as the film is developed. These several scans are individually captured as images and each individual image can be separately optimised for highlights and shadows. The resulting images are re-assembled to produce a superior image. This multiple scan process is advantageously employed in relation to both monochrome and colour films.

Using the system of the present invention, the only chemical processing step is the application of developer solution to the film. The stop, fix, clear, wash and other processing steps are all eliminated and replaced by electronic processing of the captured image.

Preferred embodiments of the invention will now be described, by way of example only, with reference to the accompanying drawings in which:
Figure 1 is a block diagram of a personal computer system suitable for use in relation to the present invention;
Figure 2a illustrates the relationship of density / signal to noise ratio and exposure time in film;
Figure 2b illustrates the relationship of density / signal to noise ratio and exposure time in polyspectrally encoded film;
Figure 3 is an illustration of a film developing system in accordance with the subject invention;
Figure 4 is a block diagram of a stitching process in accordance with the subject invention;
Figure 5A illustrates film stitching in accordance with the subject invention;
Figure 5B illustrates defect elimination as may be implemented in accordance with the subject invention;
Figure 6 is a graph of three basic film dye colours and the range seen by a particular receptor;
Figure 7 is a graph of a layered film and a plot of the six film dye colours and the range seen by a particular receptor;
Figure 8 is a block diagram of the image processing for film development that resolves each of the pixel values in accordance with the subject invention; and
Figure 9 is an illustration of a duplex film processing system in accordance with the one aspect of the present invention.

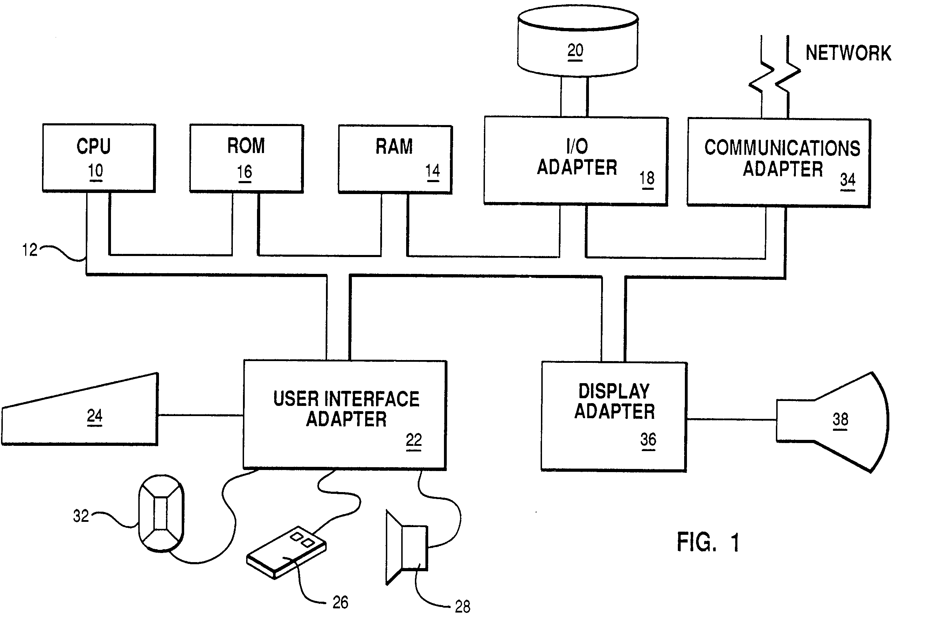

The invention is preferably practiced in the context of an operating system resident on an IBM RISC SYSTEM/6000 computer available from IBM Corporation. A representative hardware environment is depicted in Figure 1, which illustrates a typical hardware configuration of a workstation in accordance with the subject invention having a central processing unit 10, such as a conventional microprocessor, and a number of other units interconnected via a system bus 12. The workstation shown in Figure 1 includes a Random Access Memory (RAM) 14, Read Only Memory (ROM) 16, an I/O adapter 18 for connecting peripheral devices such as disk units 20 to the bus, a user interface adapter 22 for connecting a keyboard 24, a mouse 26, a speaker 28, a microphone 32, and/or other user interface devices such as a touch screen device (not shown) to the bus, a communication adapter 34 for connecting the workstation to a data processing network and a display adapter 36 for connecting the bus to a display device 38. The workstation has resident thereon the AIX operating system and the computer software making up this invention which is included as a toolkit.

### POLYSPECTRALLY ENCODED FILM

Polyspectrally encoded film refers to a universal, multispeed colour film. The film is used as a recording medium to be scanned and computer processed in accordance with the subject invention. The film is not intended to be viewed or printed directly; although, such capability is not prohibited by the invention. Unlike conventional colour film that typically has over six layers but only three standard dye colours, this film assigns six dye colours among the layers. The processed film is scanned with a separate colour for each dye. Although there may be crosstalk between the six dye colours, the scan gives each pixel an equation of six variables. Solving this matrix separates the six dye images. The algorithm then selects, for each pixel, the dye image or blend giving the most grainless representation, which enables assembly of an image superior to current technology films over a wide range of effective film speeds.

Conventional photography uses silver halide crystals to "see" light. A single photon can excite a sensitizing dye molecule that in turn generates a single atom of free silver within a crystal. This silver atom returns to the lattice in about a second unless another photon creates another free silver atom, and the two silver atoms attract each other to form a stable nucleus that grows as more photons create more silver atoms. At typically less than ten atoms, the nucleus becomes a gate through which developer can reduce all the bound silver in that one crystal. The film maker chooses the size of the crystals, or grains. If they are large, fewer photons are required per unit area to provide each grain the exposure necessary for proper development. However, if the grains are small, then the image will be "fine-grained", but more light is necessary per unit area to give each of the tiny grains enough photons for development. This is a tradeoff that photographers have struggled with until the subject invention.

Only about one percent (1%) of the photons actually induce silver atoms, much of the rest are simply passed through the silver halide film. Thus, the film maker has the option of painting several layers of film together, each sensitive as though it were the only layer. However, the emulsion is naturally milky white, and thus light diffuses within the film. A high speed film might use a thick emulsion to maximize the chance of trapping each photon. A fine grained film might use a thin emulsion darkened with anti-halation dye to prevent light diffusion and maximize sharpness at the expense of speed. Using modern thin film emulsions, seven or more layers can be placed before halation is a problem.

If all grains were the same size, then they would turn black at the same exposure resulting in a high contrast image. By mixing different sized grains, the film maker can control contrast by letting some big grains develop with very little light and more fine grains develop with more light. The problem is, the exposure time necessary for the fine grains to develop over exposes the coarse grains, and looking through these coarse grains in the same emulsion damages what could have been fine grained highlights.

The chromogenic monochrome films on the market today sandwich three emulsions together that develop chromogenically to three colours in standard colour developer. This film is identical to colour film, except that the three levels have three speeds instead of three colour sensitivities. In the darkroom, the photographer selects the high, medium or low speed emulsion by selecting a red, green or blue filter in the enlarger. In effect, three pictures are made simultaneously on three films, letting the printer select the optimal one. However, the selection is made only on the image as a whole. Thus, one cannot take the shadows from the high speed film and the white clouds from the low speed, fine grained film. Therefore, there is no quality advantage over using the right conventional film with the right exposure. The technology has two severe limitations. The first is that panchromatic paper must be used, which precludes the use of variable contrast paper and a bright safelight in the darkroom. The second is that the technique is not extendable to colour film.

Most colour films have far more than three layers. For example, there may be two magenta forming layers consisting respectively of large and small grains. The layer with large grains partially exhausts the couplers when completely exposed. Therefore, instead of leaving large sharp grains to mask the highlights as in monochrome film, the layer saturates into a more uniform neutral density by using up dye couplers in that layer. The fine grained highlights are still damaged as the saturation is not perfect, but less severely than in monochrome film. Colour films in fact have lower granularity in highlights than shadows, as opposed to silver image films which always show an increase along with density.

### DIGITAL IMAGE STITCHING

Before extending the technique to colour, first consider a technique applicable to standard chromogenic film using computer technology. Using a scanner and computer processing, monochrome chromogenic film can produce a superior image to a conventional film by allowing a computer to "stitch" together the shadows from the high speed layer and the near grainless highlights from the low speed layers. Because the separation of low speed layers from high speed layers is nearly perfect, there is no damage of the highlights by large grains from the shadows. Also, the film itself can be improved if prints always come from the computer. Because each layer is only required to reproduce a narrow range of brightness, grains outside the narrow range can be eliminated from each layer to reduce the granularity and improve the sharpness of the resultant image for a normal exposure range per layer by thinning the emulsion.

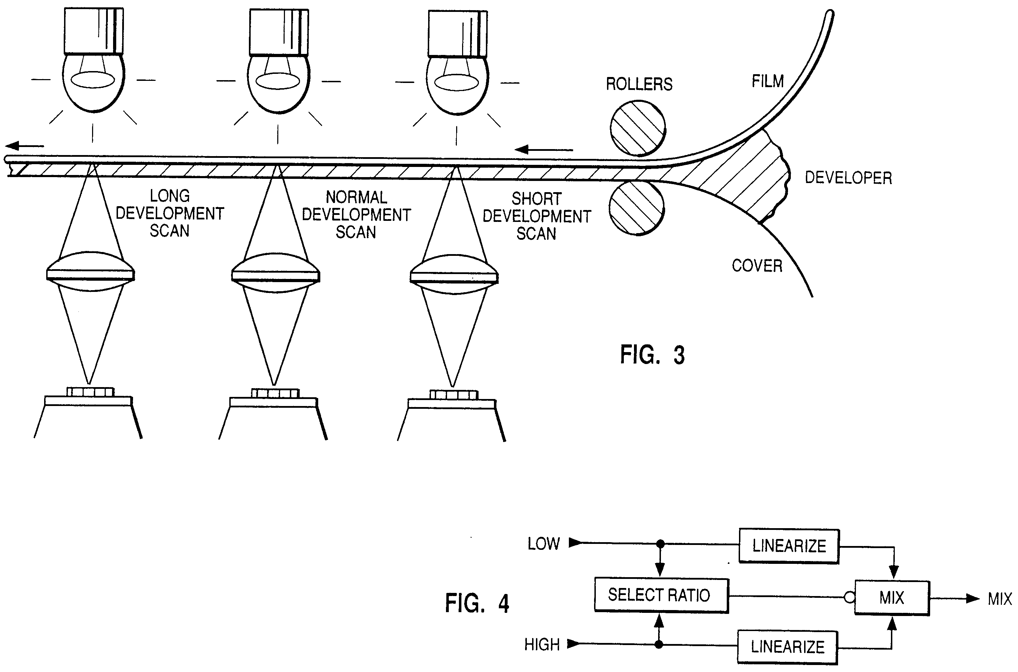

Figure 4 illustrates the "stitching" process diagrammatically. Each pixel is scanned to read the "high" sensitivity and "low" sensitivity layers, giving a high value and a low value for that pixel. Based on these two values for each pixel, a ratio is selected that picks the "low" value when the low value is strong, the more noisy "high" value when the low value is below a useable range, and a mix when the low value is weak but still useable. Both the high and low values are gamma corrected to linearize and align their density curves. The ratio selected drives a simple mixer that outputs the processed levels for the pixel. A more complex method would base the "select ratio" block on an average of high and low pixels over some small region proportional to grain size. This example uses two emulsion speeds, but the concept works equally well with three or more.

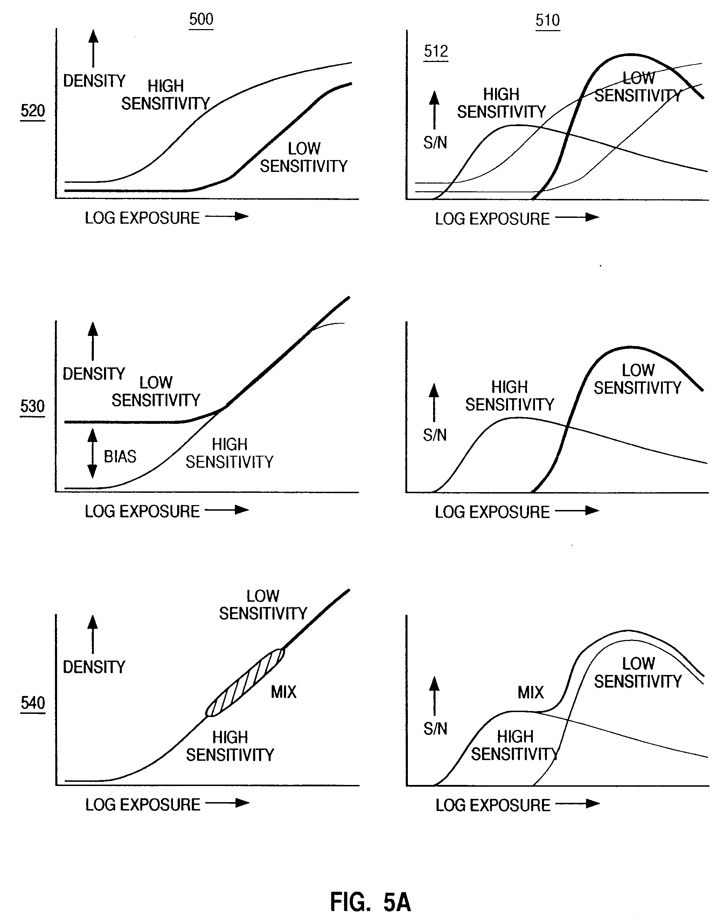

Figure 5A is an illustration of film development in accordance with the subject invention. The left column 500 shows the density of pixels versus exposure, and the right column 510 shows the signal to noise (S/N) 512 or grain to contrast ratio versus exposure. In the raw scan data of the first row 520, the low sensitivity layer requires more exposure to respond, but gives a better signal to noise ratio.

In the middle row 530, linearization is applied to both the high and low data. Linearization, also called "gamma correction", can be performed with a lookup table that stores the inverse of the film characteristic. Linearization changes both the grain and the contrast in equal amounts, leaving the signal to noise ratio unchanged.

The bottom row 540 mixes the high and low curves. In the region where both high and low emulsions are responding, a blending of both images gives a signal to noise ratio superior to either individually. The best weighting ratio for each density is known from statistical mathematics to be, for the lower layer, the S/N of the low divided by the S/N of the sum of both. For the high layer, the S/N of the high is divided by the same sum.

### POLYSPECTRALLY ENCODED COLOUR FILM

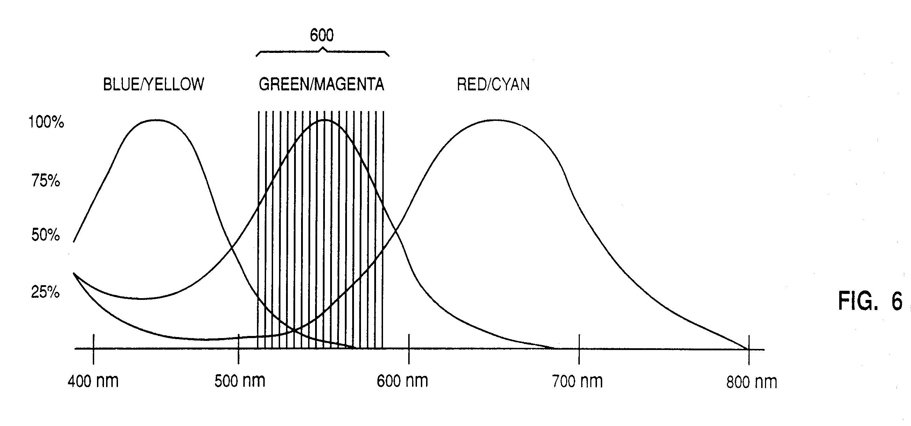

The relevancy of this information would diminish if, as in the prior art, the multispeed technology excluded colour. Now it will be extended to colour. Figure 6 is a graph of three basic film dye colours and the range seen by a particular receptor in accordance with the subject invention. The shaded area 600 marks the range of colour visible by a particular receptor, such as the green sensitive layer in colour paper. Note that the width of the dye absorptions and the width of the receptor response barely allow the three colours to be placed in the visible spectrum without too much crosstalk.

The colour names are unimportant. They are based on an old paradigm that films can only modulate in three colours because that is all the human eye can see, and films are made to be seen. In fact, film can use a different colour for each of the six or more layers in today's colour film. The dyes in a film are picked from a selection that includes peaks at any visible wavelength.

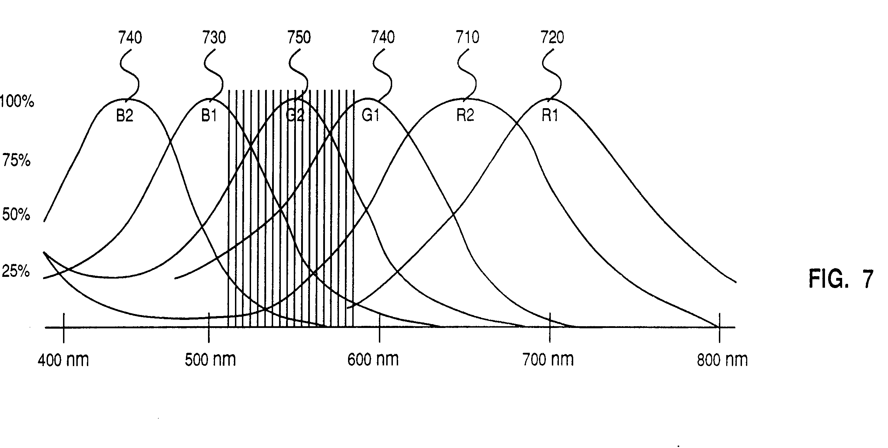

Figure 7 is a graph of a layered film and a plot of the absorption of dyes in each of the six layers, and the range seen by a particular receptor in accordance with the subject invention. Figure 7 merges a typical cyan dye from transparencies 710, a typical cyan dye from negatives 720, and an intermediate yellow 730 and magenta 740 with standard yellow 740 and magenta 750 to total six colours. Now the film has twice the information that can be seen by the human eye. It is also not usable for printing because the overlap of the dyes has made it impossible for any sensitized layer in a paper to respond to just one of the dye layers free from crosstalk from adjacent dyes.

The film is optimal for a scanning operation. Six scans at different wavelengths provide six variables for each pixel. Even though there will be cross talk, these six variables can be solved by six equations for the six unknowns which are the densities of each dye level for a particular pixel. Six scans are made at different colours and the matrix is applied to separate the six dye records. For each of the three sensitivity colours, red, green and blue this example yields two dye records for the high and low sensitivity levels. The two dye records are mixed using the stitching method as disclosed above to produce an optimum image. By using this blend of photochemistry and computer science, a superior film based imaging technique is created.

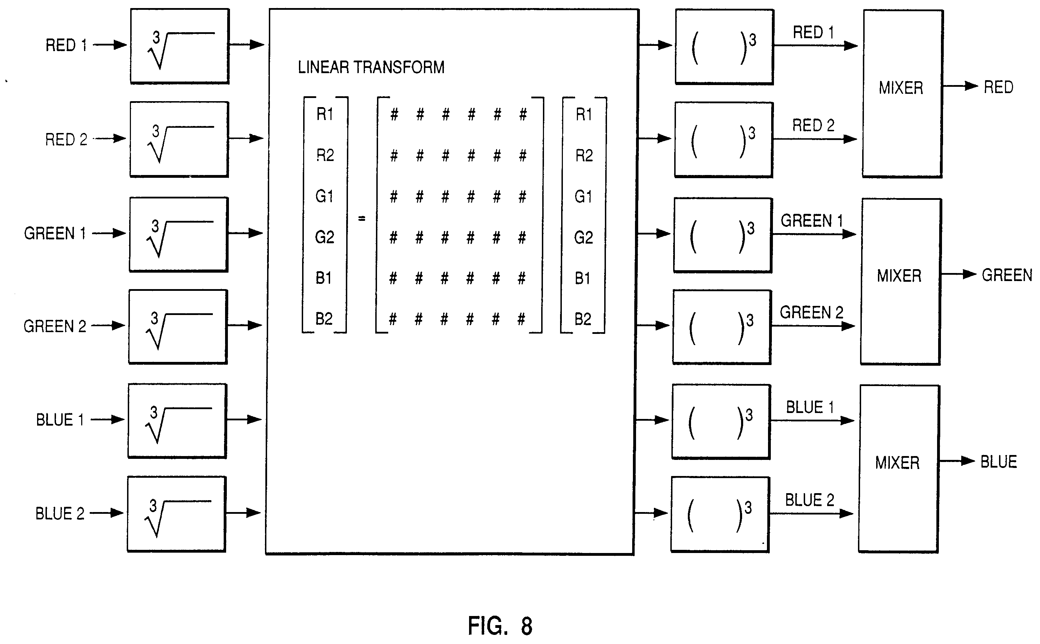

Figure 8 is a block diagram of the image processing for film development that resolves each of the six dye densities for each pixel values in accordance with the subject invention. By operating in the cube root regression domain, applicant has found superior resolution from a simple linear regression. The method of this invention changes accepted conventions. The computer becomes, not an accessory to photography, but a core technology for the photographic process.

### ELECTRONIC FILM DEVELOPMENT

Today, a photographer drops off her film at a processing lab and awaits the results. The processing lab sends the film to a darkroom for exposure to developer, fix and rinse. Then, the resulting negatives are individually loaded into an enlarger for creation of positive prints. The invention does away with the processing lab and substitutes a computer.

For years, photographers have been required to enter a darkroom and carefully monitor the time that negatives were exposed to the initial chemical mixture. A rare technique was to desensitize the film first using a special dye. Then, a safety light could be illuminated and the photographer can watch the images come alive in the developer. Each precious image would get just the right time, some were snatched quickly, while others had to be nursed for long periods. However, there is no optimal development time. White clouds may show their lacy details best after only three minutes, but the darkest shadows may not reveal their secrets for thirty minutes or more, with the resultant destruction of the white clouds. Photographers dreamed of the impossible chemical feat of combining the image of the clouds at three minutes with the shadows after thirty minutes. The subject invention turns what could only be a dream in the chemical development processing into an electronic reality.

The invention employs image capture of a developing film multiple times during the development process. The scans use a colour that does not expose the film, normally infrared. The timings of the scans give a normal, an extra long and an extra short development.

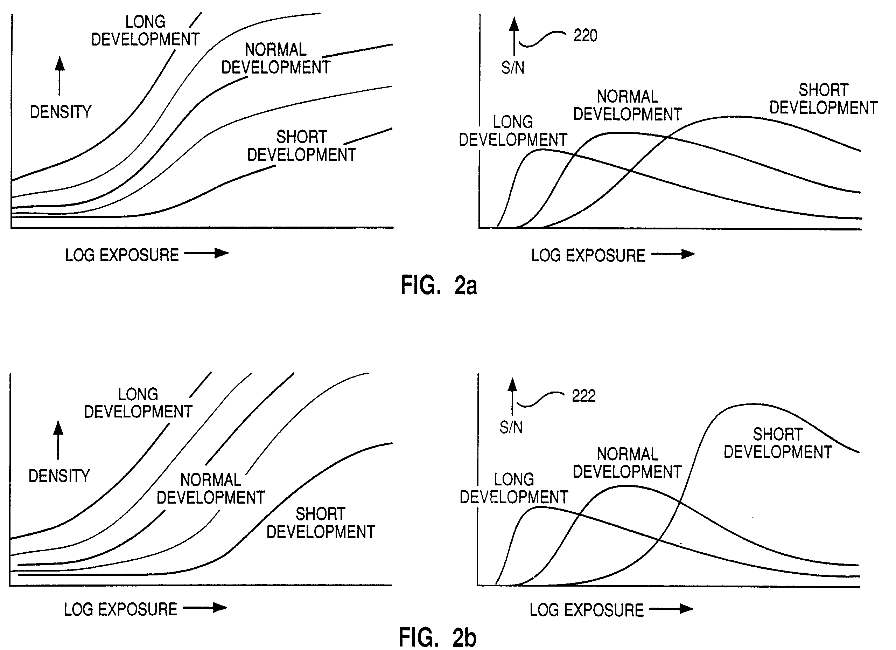

Figure 2a illustrates the results on the left with density, and on the right with signal to noise versus exposure. In photography, the signal gain is "contrast" and the noise is "grain." Contrast alone is irrelevant to a digital system because it can be easily changed for aesthetics, so the signal to noise ratios (S/N) 220 and 222 are key. Figure 2a illustrates that overdevelopment pulls more detail from shadows but "blocks up" or "ruins" the highlights, while underdevelopment gives smooth highlights while shadow detail remains latent. It is clear that if one could develop the film all three ways, then an image could be created with the best characteristics of each development time.

Building film specifically for this processing allows further improvements. In such a film, the fine grains develop much faster than the coarser grains as in Figure 2b. This order is actually easy to do, usually the problem is to slow down the finer grains so that they do not get ahead of the larger grains. With such a film, the short development scan gives a fully developed fine grain image with the signal to noise ratio of a normal fine grained film. Continuing to normal development, the faster fine grains in this special film block up the highlights compared to a normal film. The block is acceptable, because the highlights have already been captured in the previous scan. Now another scan is performed to capture the middle tones. By constructing a film in this way, and scanning during development, the wide range, universal nature of a monochrome chromogenic film is realized without the dyes.

Scanning during development seems a messy process. However, there is a key element that obviates much of the apparent messiness. Only the developer bath is necessary. The stop, fix, clear, wash, wetting agent, and dry are all eliminated. This single bath can be stored in pods and applied as a viscous fluid under a clear cover film with rollers as illustrated in Figure 3.

### ARTIFACT DEFECT CORRECTION

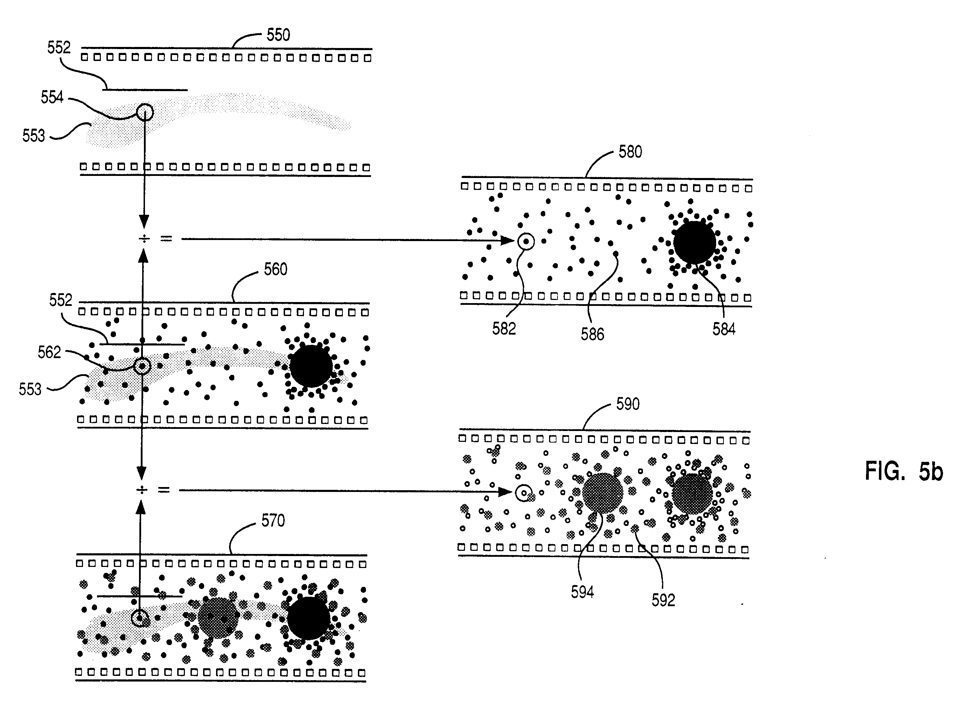

Figure 5B is an illustration of the physical film medium as it is scanned to create a digital image in accordance with the subject invention. Defects in the film base, such as scratches or variations in the antihalation dye add undesirable artifacts to the image using the process as heretofore described. A film 550 is scanned at different times during development to produce an undeveloped image 550 before crystals have begun to develop, a partially developed image 560 after the fine grains have developed but before the large grains have begun to develop, and a fully developed image 570 after the large grains have appeared. All images contain the same defects 553 and scratches 552 because they are of the same physical piece of film.

The numerical value representing the light returned from each pixel 562 of the partially developed image 560 is divided by that numerical value of each pixel 554 of the undeveloped image 550 to produce a resulting numerical pixel value 582. This value is combined with the values of the other pixels to produce a finished image 580. In processed image 580, the film defects 553 and scratches 552 appearing in both the undeveloped film image 550 and partially developed film image 560 are cancelled by a division, leaving only the newly developed grains 586 forming light induced shapes 584.

The processing is extended by similarly dividing the pixels of the fully developed image 570 by the pixels of an image 560 made earlier in the development process to reveal the newly developed large grains 592 forming finer light induced shapes 594 free of the film defects 553 and scratches 552, and further, free of interferences from the smaller grains 586 that had already developed in the earlier image 560. The processed images 580 and 590 may be combined using the stitching process described earlier to form a final image with reduced granularity and free of physical film defects. For simplicity, Figure 5B shows a case employing three scans during development. A larger number can be used to improve the definition, and the illustrative case of three is not intended as a limitation.

### DUPLEX FILM SCANNING

Again, the relevancy of electronic film development would diminish if, as in the prior art, this technology excluded colour. The next section discusses a technique for extending the processing to colour. Duplex film scanning refers to scanning a film with reflected light from both sides of the film and by transmitted light. The scanning is performed on film that is being processed or on film returned to a solution that makes the emulsion opalescent. The system provides a means for developing monochrome or colour film with greatly improved detail, recovering greatly improved detail from historical monochrome film, and constructing a greatly improved colour film with no dyes.

For years, the applicant used a process called "inspection development". Panchromatic 4 x 5 inch negatives were first placed in a desensitizing solution so that the development could be viewed under a dim safelight. Developing shadow detail emerged from the emulsion side, but from the base side only the highlight detail emerged. Monochrome films are manufactured with a high speed layer over a low speed, fine grained layer. A stereo microscope reveals the different size of grains at different depths in a finished negative. The opalescence of the unfixed emulsion made it whitish and partially opaque. Backscattering when viewed from the rear made only the back, fine grained layer of the emulsion visible. However, from the front, only the high speed layer was visible. The image could also be viewed by bright, transmitted light to see all layers together.

On one occasion, applicant accidentally developed a colour film using the same technique. It was a scene of a cityscape at night with many brightly coloured lights. At first, it seemed peculiar that the highlight/shadow separation applicant was used to observing between the front and the back had not developed. Then, applicant noticed that some lights were appearing from the front that did not appear from the back and vice-versa. At that point, applicant detected that colour film had accidentally been used. The red and blue silver images were viewed separately before any of the colours had formed. It was then that applicant realized that if a person could view separated colour as the film developed, then so could a scanner.

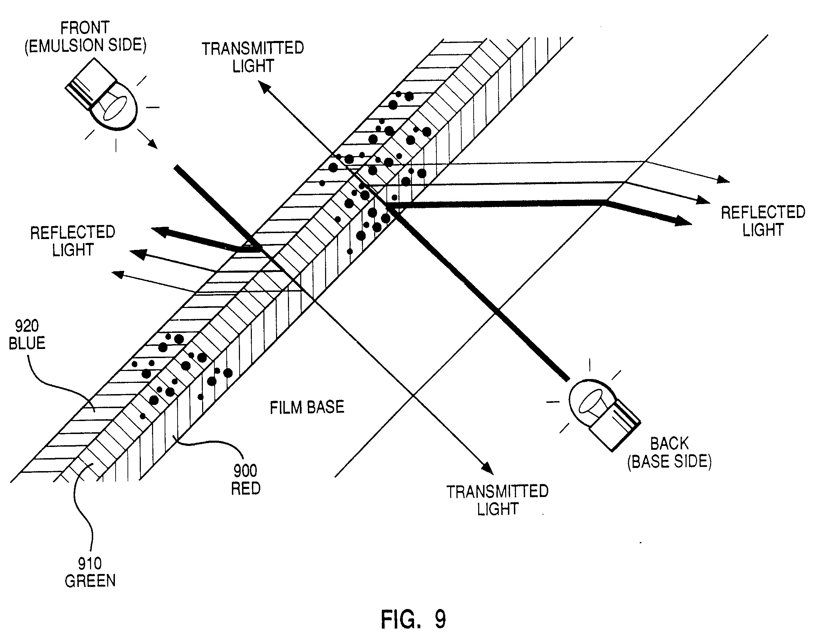

Figure 9 is an illustration of a duplex film processing system in accordance with the subject invention. In the figure, separate colour levels are viewable within a developing film 900 red, 910 green and 920 blue. The film is illustrated greatly enlarged. Over a clear film base are three layers sensitive separately to red, green and blue light. These layers are not physically the colours. Rather, they are sensitive to these colours. In normal colour development, the blue sensitive layer would eventually develop a yellow dye, the green sensitive layer a magenta dye, and the red sensitive layer a cyan dye.

During development, these layers are opalescent. Dark grains developing in the top layer 920, the blue source layer, are visible from the front of the film, but are hidden from the rear by the bulk of the opalescent emulsion. Similarly, grains in the bottom layer 900, the red sensitive layer, are visible from the back by reflected light, but not from the front. Grains in the middle layer 910, the green sensitive layer, are mostly hidden by reflected light from the front or the back. However, they are visible along with those in the other layers by transmitted light. By sensing light reflected from the front, the back and light transmitted through the film. each pixel in the film yields three measured numbers that may be solved for the three colours. The solution can use the matrix regression such as that illustrated above in Figure 8.

Although this technique may be applied to standard colour film, another option is a film built specifically for this purpose. The film would require no colour couplers as a colour image never develops. Also, the amount of antihalation response to the infrared of the scanner is balanced so the images are never too dark or too light, and subsequently diffused by the emulsion.

The process may be extended to standard black and white films by practicing the invention to scan the high speed image from the front and the fine grain highlight image from the back. Following the scanning, the stitching process previously described is applied to recover a more grain-free image than would be available from a conventionally developed film. Similarly, the invention may be extended to historical black and white films by returning them to a state of opalescence and scanning from the front and back to reveal separately the high speed and low speed layers.

All prior art technologies suffer from the presumption that films must be printable with an enlarger onto another photochemical receiver such as paper or directly viewed by a human eye. The invention uses a scanner and processing on a computer to replace the prior art method.

## Claims

1. Film processing apparatus comprising:
means for scanning an image on a film as it develops; and
means for creating a digital representation of the image on the film.

2. Apparatus as claimed in claim 1 wherein the scanning means is operable to scan the film with both reflected and transmitted light.

3. Apparatus as claimed in claim 1 or claim 2, said means for scanning being operable to repeatedly scan the image on the film at different times during the development process, said creating means creating a plurality of digital representations of the film image.

4. Apparatus as claimed in claim 2, including means for creating an optimal digital image by manipulating the plurality of digital representations of the film image.

5. A scanner as claimed in claim 3 or claim 4, including means for storing the digital representations of the film images.

6. Apparatus as claimed in any preceding claim wherein the development process requires only application of a developer solution to the film to be processed.

7. Apparatus as claimed in any preceding claim, wherein the scanning means operates in the infrared part of the spectrum.

8. A method for producing a digital image, comprising the steps of:
scanning an image on a film as it develops; and
creating a digital representation of the image on the film.

9. A method as claimed in claim 8, including the step of repeatedly scanning the image on the film at different times during the development to create a plurality of digital representations of the film image.

10. A method as claimed in claim 9, including the step of creating an optimal digital image by manipulating the digital representations of the images on the film.

11. A method as claimed in any of claims 8 to 10, wherein the film development step requires only the application of a developer solution to the undeveloped film.

12. A method as claimed in any of claims 8 to 11, wherein the step of scanning is performed in the infrared.
